Europäisches Patentamt

European Patent Office

Office européen des brevets

(11) Veröffentlichungsnummer: **0 477 933 A1**

# EUROPÄISCHE PATENTANMELDUNG

(21) Anmeldenummer: **91116431.7**

(22) Anmeldetag: **26.09.91**

(51) Int. Cl.⁵: **B60J 7/057**, E05F 15/10

(30) Priorität: **27.09.90 US 588822**

(43) Veröffentlichungstag der Anmeldung:
**01.04.92 Patentblatt 92/14**

(84) Benannte Vertragsstaaten:
**DE ES FR GB IT NL SE**

(71) Anmelder: **Webasto AG Fahrzeugtechnik**
**Kraillingerstrasse 5**
**W-8035 Stockdorf(DE)**

(72) Erfinder: **Regner, Otto**
**5491 Winchester**
**Troy, Michigan 48098(US)**

(54) **Motorantriebsanordnung zum Verstellen eines verstellbaren Fahrzeugteils.**

(57) Motorantriebsanordnung zum Verstellen eines verstellbaren Fahrzeugteils, insbesondere des Dekkels eines Sonnendaches, mit einem umsteuerbaren Antriebsmotor, dessen Rotor mit einer Schnecke verbunden ist, die mit einem Schneckenrad kämmt, das seinerseits mit einem Antriebsritzel zum Antrieb mindestens eines mit dem verstellbaren Fahrzeugteil in Antriebverbindung stehenden, langgestreckten Antriebselements verbunden ist. Das Schneckenrad steht ferner mit einem Steuerorgan (120) in Eingriff, das von dem Schneckenrad zu einer Hypzykloidalbewegung veranlaßt wird. Das Steuerorgan (120) trägt Kontakte, die mit Kontakten einer feststehenden elektrischen Leiterplatte (140) zusammenwirken, um den Antriebsmotor abzuschalten, wenn das verstellbare Fahrzeugteil vorbestimmte Stellungen einnimmt.

FIG. 6

EP 0 477 933 A1

Die Erfindung betrifft eine Motorantriebsanordnung zum Verstellen eines verstellbaren Fahrzeugteils, beispielsweise des Deckels oder der Abdeckung eines Sonnendaches.

Motorisch angetriebene Sonnendachanordnungen sind beispielsweise aus der US-A-4 531 777 bekannt. Die dort beschriebene Anordnung erlaubt einen wahlweisen Handantrieb oder motorischen Antrieb. Für diesen Zweck weist die Sonnendachanordnung eine Kombination von gemeinsamen Komponenten auf, die unabhängig davon vorgesehen werden, welche Antriebsart im Einzelfall gewählt wird. Zu diesen gemeinsamen Komponenten gehören ein Dachrahmen, der unterhalb und hinter einer in einer festen Dachfläche ausgebildeten Dachöffnung angebracht wird, ein Deckel zum wahlweisen Verschließen oder mindestens teilweisen Freilegen der Dachöffnung, eine Einbaueinheit zum Abstützen des Deckels auf dem Dachrahmen sowie eine Deckelmechanik zum Verstellen des Deckels in entgegengesetzten Richtungen zwischen zwei Endstellungen. Eine dieser Endstellungen ist eine Offenstellung; bei der anderen handelt es sich um eine Lüftungsstellung; dazwischen liegt eine Schließstellung. Zu der Anordnung gehören ferner Komponenten zum Verstellen des Deckels in eine dieser drei Stellungen und aus diesen Stellungen heraus in Abhängigkeit von Eingangsdrehbewegungen in entgegengesetzten Richtungen. Zur Kraftübertragung sind dabei ein Antriebsritzel und ein oder mehrere langgestreckte Antriebselemente, insbesondere drucksteife Antriebskabel, vorgesehen, welche die Antriebsverbindung zwischen dem Antriebsritzel und dem Deckel herstellen, um für die gewünschten Bewegungen des Deckels in Abhängigkeit von den Drehbewegungen des Antriebsritzels zu sorgen.

Bei der bekannten Lösung wird für einen Handantrieb eine Handkurbel mit dem Antriebsritzel verbunden. Wird ein motorischer Antrieb gewählt, wird das Antriebsritzel mittels eines in seiner Drehrichtung umsteuerbaren Gleichstrommotors über ein Getriebe angetrieben, und eine Steuerschaltung ist vorgesehen, um den Antriebsmotor zwecks Ausführung der gewünschten Bewegungen ein- und auszuschalten.

Eine wünschenswerte Eigenschaft der Steueranordnung besteht darin, daß sie in sich abgeschlossen und unabhängig arbeitend ausgebildet ist und insbesondere nicht den Anbau von Positionssensorschaltern an verschiedenen Stellen der Anordnung erforderlich macht. Die in der US-A-4 531 777 offenbarte Antriebsanordnung und ihre Steuerschaltung sind zwar durchaus funktionsfähig; dort müssen jedoch die Komponentnen in relativ kostspieliger Weise ausgebildet, angeordnet und montiert werden.

Der vorliegenden Erfindung liegt die Aufgabe zugrunde, das vorstehend diskutierte Bedürfnis zu erfüllen und insbesondere eine Motorantriebsanordnung zu schaffen, die mit einer besonders geringen Anzahl von Einzelteilen auskommt und bei der diese Einzelteile besonders einfach montiert werden können.

Entsprechend einem Aspekt der vorliegenden Erfindung wird eine Motorantriebsanordnung zum Verstellen eines verstellbaren Fahrzeugteils zwischen zwei Endstellungen geschaffen, die versehen ist mit
einem Gehäuse,
einem von dem Gehäuse getragenen, umsteuerbaren Antriebsmotor mit einem um eine Rotorachse in entgegengesetzten Richtungen drehbaren Rotor,
einer mit dem Rotor drehfest verbundenen und zusammen mit diesem in dem Gehäuse um die Rotorachse drehbaren Schnecke,
einem mit einer zentralen Nabe versehenen Schneckenrad, dessen Achse senkrecht zu der Rotorachse steht und das an seiner einen Stirnfläche im Bereich eines zu der Schnecken-radachse konzentrischen Kreisringes, eine in Richtung der Schneckenradachse weisende, mit der Schnecke kämmende Verzahnung trägt,
wobei das Gehäuse so ausgebildet ist, daß das Schneckenrad bei der Montage in Axialrichtung in die mit der Schnecke kämmende Stellung geschoben werden kann,
einem mit dem Schneckenrad drehfest verbundenen Antriebselement,
einer von dem Antriebselement angetriebenen Anordnung zum Verstellen des Fahrzeugteils in entgegengesetzten Richtungen zwischen den beiden Endstellungen in Abhängigkeit von der Drehbewegung des Antriebselements in entgegengesetzten Richtungen, und
einer Steuereinrichtung zum
(1) wahlweisen Einschalten des Antriebsmotors mit ausgewählter Rotordrehrichtung zwecks Verstellung des Fahrzeugteils in entgegengesetzten Richtungen, und zum
(2) Ausschalten des Antriebsmotors zwecks Anhalten des Fahrzeugteils in der erreichten Stellung einschließlich der beiden Endstellungen.

Entsprechend einem weiteren Aspekt der vorliegenden Erfindung ist eine Motorantriebsanordnung zum Verstellen eines verstellbaren Fahrzeugteils zwischen zwei Endstellungen ausgestattet mit
einem Gehäuse,
einem von dem Gehäuse getragenen, umsteuerbaren Antriebsmotor mit einem um eine Rotorachse in entgegengesetzten Richtungen drehbaren Rotor,
einer mit dem Rotor in Antriebsverbindung stehenden Getriebeanordnung,
einer die Getriebeanordnung mit dem verstellbaren Fahrzeugteil verbindenden Übertragsanordnung zum Verstellen des Fahrzeugteils zwischen den beiden Endstellungen in entgegengesetzten Richtungen in Abhängigkeit von der Drehbewegung des Rotors, und

einer Steuereinrichtung zum wahlweisen Einschalten des Antriebsmotors in ausgewählter Rotordrehrichtung,

wobei die Steuereinrichtung versehen ist

mit einem eine Drehachse aufweisenden Steuerorgan, das an dem Gehäuse in Wirkungsverbindung mit der Getriebeanordnung derart gelagert ist, daß

(1) bei einer Drehbewegung des Rotors in der einen Richtung das Steuerorgan eine Drehbewegung in einer Richtung um seine Drehachse ausführt, während seine Drehachse entlang einer kreisförmigen Bahn in einer Richtung verstellt wird, und

(2) bei einer Drehbewegung des Rotors in der anderen Richtung das Steuerorgan eine Drehbewegung in der anderen Richtung um seine Drehachse ausführt, während seine Drehachse entlang der kreisförmigen Bahn in der anderen Richtung verstellt wird, und

mit einer an dem Gehäuse angebrachten Leiterplatte,

wobei die Bewegung des Steuerorgans mit der Bewegung des verstellbaren Fahrzeugteils derart koordiniert ist, daß das Steuerorgan bezüglich seiner Drehstellung um seine Drehachse und der Stellung seiner Drehachse entlang der kreisförmigen Bahn während der gesamten Bewegung des verstellbaren Fahrzeugteils zwischen den beiden Endstellungen unterschiedliche Lagen einnimmt, und

mit miteinander zusammenwirkenden, von der Leiterplatte und dem Steuerorgan getragenen, stellungsabhängigen Steuermitteln zum Abschalten des Antriebsmotors und zum Anhalten des verstellbaren Fahrzeugteils bei Erreichen der einen oder der anderen Endstellung.

Bei dem verstellbaren Fahrzeugteil kann es sich insbesondere um den Deckel einer Sonnendachanordnung für ein mit einer Dachöffnung versehenes Fahrzeugdach handeln, wobei der Deckel mittels einer Deckelmechanik zwischen einer die eine Endstellung bildenden Offenstellung über eine Schließstellung in eine die andere Endstellung bildende Lüftungsstellung verstellbar ist, wobei das Gehäuse benachbart der Dachöffnung dachfest angebracht ist, und wobei die stellungsabhängigen Steuermittel zusätzlich zum Anhalten des Deckels in der Schließstellung ausgelegt sind.

Die Motorantriebsanordnung nach der Erfindung ist in hohem Maße kostensparend, weil sie mit einer in sich abgeschlossenen, unabhängigen Steuerung ausgerüstet ist, die mit einer besonders geringen Anzahl von einfach zu montierenden Teilen auskommt.

In weiterer Ausgestaltung der Erfindung weist die Steuereinrichtung ein eine Hypozykloidalbewegung ausführendes Steuerorgan auf, das an dem Gehäuse mit Bezug auf das Schneckenrad um eine Drehachse derart drehbar gelagert ist, daß

(1) bei einer Drehbewegung des Schneckenrades in der einen Richtung das Steuerorgan eine Drehbewegung in einer Richtung um seine Drehachse ausführt, während seine Drehachse entlang einer kreisförmigen Bahn in einer Richtung verstellt wird,
und

(2) bei einer Drehbewegung des Schneckenrades in der anderen Richtung das Steuerorgan eine Drehbewegung in der anderen Richtung um seine Drehachse ausführt, während seine Drehachse entlang der kreisförmigen Bahn in der anderen Richtung verstellt wird,

wobei die Steuerorganbewegung mit der Bewegung des verstellbaren Fahrzeugteils derart koordiniert ist, daß das Steuerorgan bezüglich seiner Drehstellung um seine Drehachse und bezüglich der Stellung seiner Drehachse entlang der kreisförmigen Bahn während der gesamten Verstellung des verstellbaren Fahrzeugteils zwischen den beiden Endstellungen unterschiedliche Lagen einnimmt, und

wobei die Steuereinrichtung ferner mit stellungsabhängigen Steuermitteln versehen ist, die in Abhängigkeit von der Lage des Steuerorgans den Antriebsmotor abschalten und den Rotor sowie das verstellbare Fahrzeugteil anhalten, wenn das Fahrzeugteil eine der beiden Endstellungen und gegebenenfalls eine Zwischenstellung erreicht.

Ein Ausführungsbeispiel der Erfindung ist im folgenden unter Bezugnahme auf die Zeichnungen beschrieben. Es zeigen:

Fig.1
eine perspektivische auseinandergezogene Darstellung der Einzelteile eines Sonnendaches, bestehend aus einem Schiebedachrahmen, einer Einbaueinheit und einem Deckel;

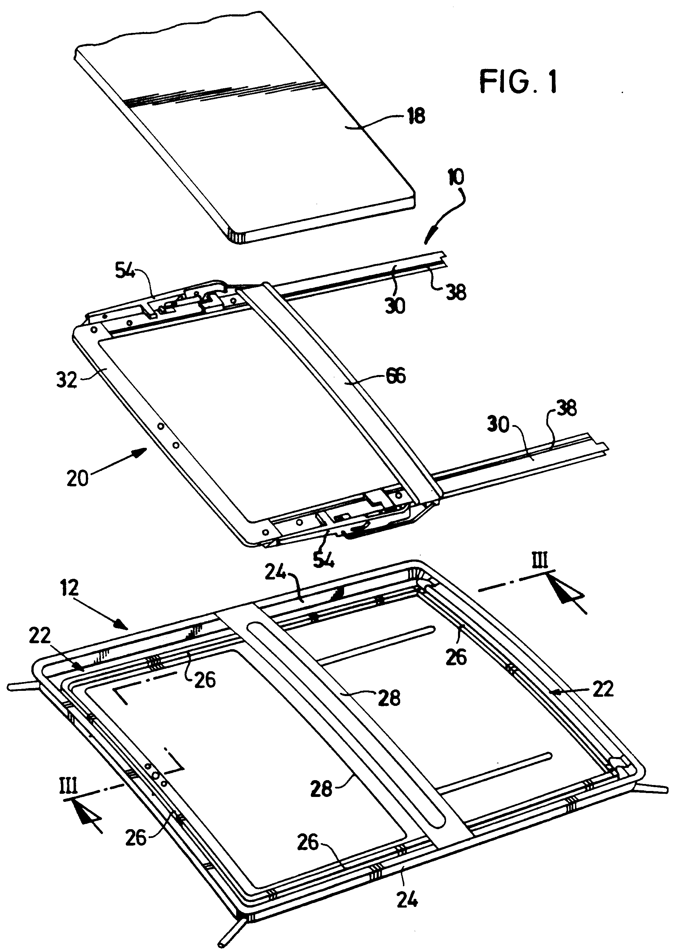

Fig.2
eine Ansicht der Einbaueinheit gemäß Fig. 1, von unten gesehen;

Fig.3
in größerem Maßstab einen Teilschnitt entlang der Linie III-III der Fig.1;

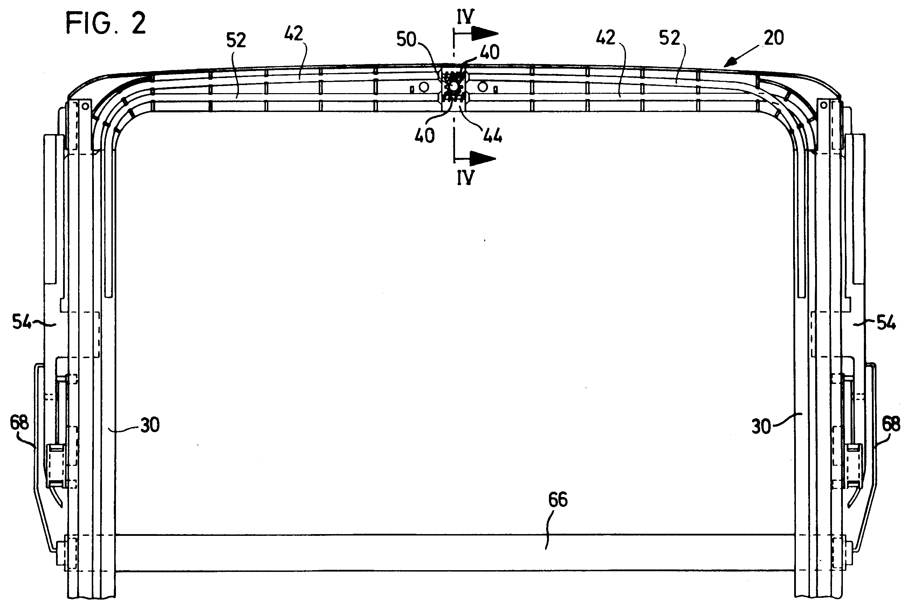

Fig.4
in größerem Maßstab einen Schnitt entlang der Linie IV-IV der Fig.2, wobei der Dachrahmen und die Antriebseinheit im Aufriß dargestellt sind;

Fig.5
in größerem Maßstab einen Teilschnitt entlang der Linie IV-IV der Fig.2, wobei auch die Antriebseinheit geschnitten dargestellt ist;

Fig.6

eine auseinandergezogene perspektivische Ansicht der Antriebseinheit, gesehen schräg von unten;

Fig.7

eine Draufsicht auf die Antriebseinheit;

Fig.8

in größerem Maßstab eine Teilansicht der Antriebseinheit von unten bei abgenommener Leiterplatte;

Fig.9

eine Draufsicht auf die Kontakte der Leiterplatte, die mit von dem umlaufenden Steuerorgan getragenen Kontakten zusammenwirken, wobei die Bewegungsbahnen der Kontakte des Steuerorgans schematisch angedeutet sind;

Fig.10, 11 und 12

schematische Darstellungen des Sonnendaches in der Offenstellung (Fig. 10), der Schließstellung (Fig.11) und der Lüftungsstellung (Fig. 12); sowie

Fig.13

ein Schaltbild der mit der Leiterplatte verbundenen Schaltungsanordnung.

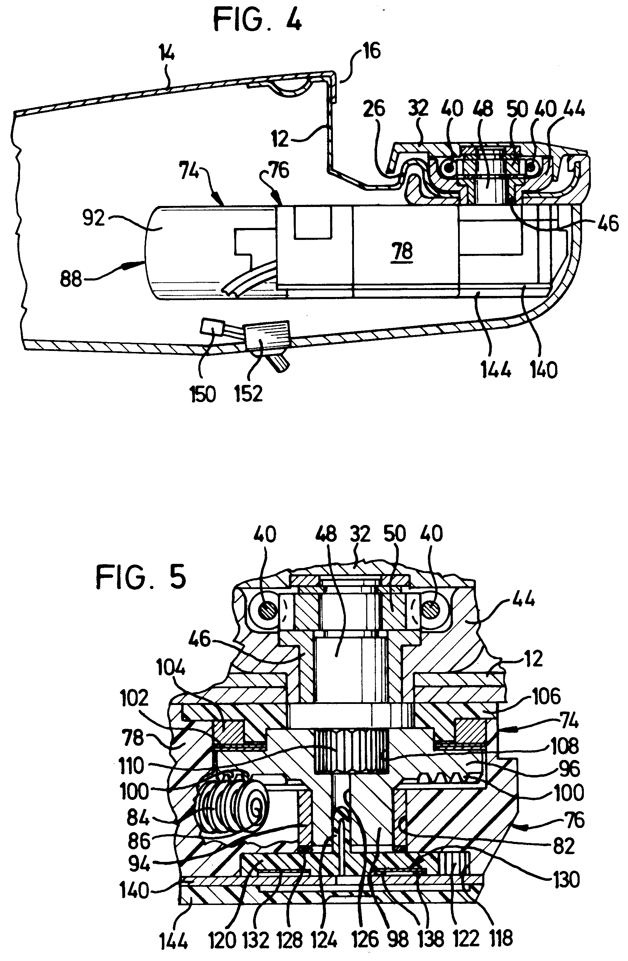

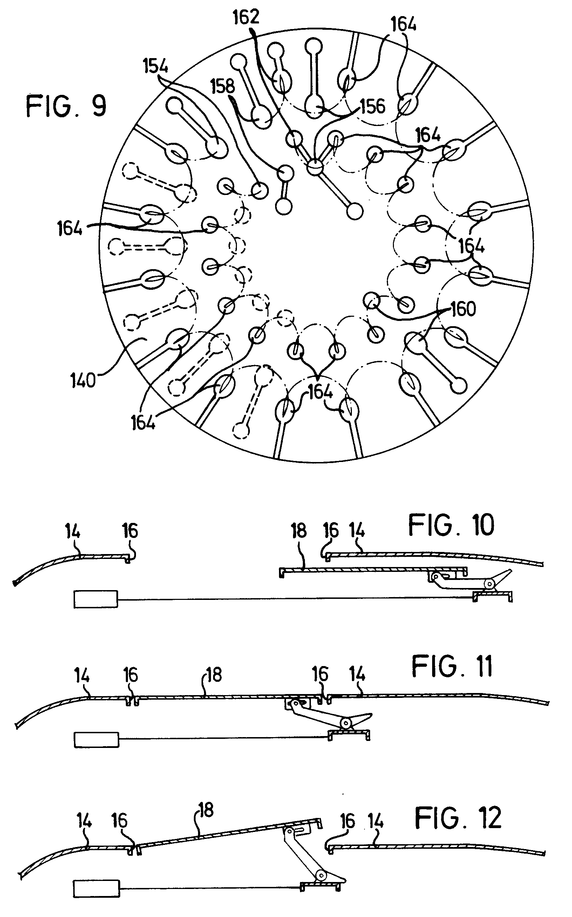

In den Zeichnungen ist das motorisch angetriebene Sonnendach als Ganzes mit 10 bezeichnet. Zu dem Sonnendach 10 gehört ein Dachrahmen 12, der an einer festen Dachfläche 14 (Fig.4) eines Kraftfahrzeuges unterhalb einer in der Dachfläche 14 ausgebildeten Dachöffnung 16 fest angebracht werden kann und der sich von der Dachöffnung 16 nach hinten erstreckt. Das Sonnendach 10 weist einen Deckel 18, dessen Größe so bemessen ist, daß er in die Dachöffnung 16 paßt und diese verschließt, sowie eine Einbaueinheit 20 auf. Die Einbaueinheit 20 stellt die Verbindung zwischen dem Dachrahmen 10 und dem Deckel 18 her, und sie erlaubt es, den Deckel 18 zwischen einer in Fig.10 veranschaulichten Offenstellung, einer in Fig. 12 dargestellten ausgestellten Lage oder Lüftungsstellung und einer in Fig. 11 gezeigten Schließstellung zu verstellen.

Der Dachrahmen 12, die Einbaueinheit 20 und der Deckel 18 sind so aufgebaut, wie dies an sich aus US-A-4 332 416 und US-A-4 531 777 bekannt ist. Sie bedürfen infolgedessen keiner näheren Erläuterung. Es versteht sich jedoch, daß, falls erwünscht, auch andere Ausbildungen möglich sind. Bei der veranschaulichten Ausführungsform bildet der Dachrahmen 12 eine umlaufende Wasserrinne 22, die von einer Außenwand 24 und einer Innenwand 26 begrenzt ist. Eine querverlaufende Rahmenstrebe 28 verbindet die Seitenränder des Dachrahmens 12 etwa in dessen Mitte.

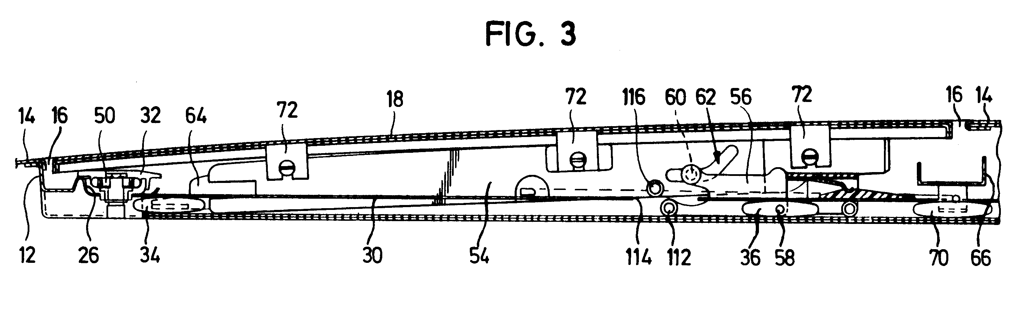

Die den Deckel 18 tragende Einbaueinheit 20 weist seitliche Führungsbahnen 30 auf, deren vordere Enden über eine Abdeckung 32 untereinander verbunden sind. Die Führungsbahnen 30 bilden im Querschnitt U-förmige Führungen, entlang denen der Deckel 18 über vordere Gleitschuhe 34 und hintere Gleitschuhe 36 verstellbar geführt ist, die in den Führungsbahnen 30 laufen (Fig.3). Des weiteren ist jede Führungsbahn 30 mit einem Führungskanal 38 für ein drucksteifes Antriebskabel 40 versehen, das eine wendelförmige Verzahnung trägt. Jedes Antriebskabel 40 greift an dem zugeordneten hinteren Gleitschuh 36 an und erstreckt sich nach vorne durch den zugeordneten Führungskanal 38 hindurch sowie dann in ein Führungsrohr 42 hinein. Die Führungsrohre 42 verlaufen im Bogen unterhalb der Abdeckung 30, wie dies in Fig.2 zu erkennen ist, und sie reichen bis zur Mitte der Abdeckung 32.

Ein Kabelführungsstück 44 sitzt in der Mitte der Abdeckung 32. Es weist ein Lager 46 auf, in dem eine Ritzelwelle 48 gelagert ist. Am oberen Ende der Ritzelwelle 48 ist ein Ritzel 50 befestigt. Einander diametral gegenüberliegende Zähne des Ritzels 50 stehen mit den beiden eine wendelförmige Verzahnung tragenden Antriebskabeln 40 in Eingriff, die in entsprechenden Richtungen von den Führungsrohren 42 aus durch das Führungsstück 44 hindurchreichen. Nach Überqueren des Führungsstückes 44 werden die freien Enden der Antriebskabel 40 in Führungsrohre 52 geleitet, die, ebenso wie die Führungsrohre 42, an der Abdeckung 32 angeklipst sind.

Die auf beiden Seiten des Deckels 18 sitzenden Gleitschuhe 34 und 36 sind über eine Blende 54 miteinander verbunden. Die Verbindung zwischen jedem der hinteren Gleitschuhe 36 und der zugehörigen Blende 54 erfolgt über einen Ausstellhebel 56, der über eine Achse 58 an dem zugehörigen Gleitschuh 36 angelenkt ist, sowie über einen Stift 60, der in einen Kulissenschlitz 62 der Blende 54 eingreift. Die Blenden 54 sind mit dem zugeordneten vorderen Gleitschuh 34 über einen Gleitschuhträger 64 verbunden. Zu der Einbaueinheit 20 gehört ferner eine hintere Wasserrinne 66, die in den Führungsbahnen 30 über Stangen 68 geführt ist, von denen jede mit einer der Blenden 54 und einem zugehörigen Gleitschuh 70 verbunden ist, der zusammen mit den Gleitschuhen 34 und 36 in die betreffende Führungsbahn 30 eingesetzt ist. In der aus der US-A-4 332 416 bekannten Weise kann die Einbaueinheit 20 in vollständig vormontierter Form auf ihre Funktionsbereitschaft geprüft und dann an dem Dachrahmen 12 montiert werden. Nach dem Einsetzen und Fixieren der Einbaueinheit 20 wird der Deckel 18 über seitliche Laschen 72 mit den Blenden 54 verbunden, beispielsweise verschraubt.

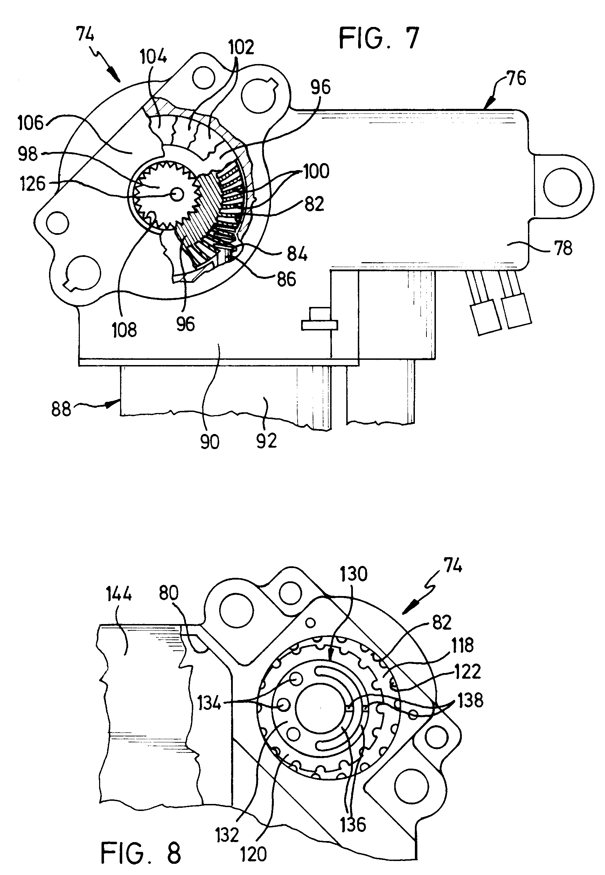

Wie am besten aus Fig.4 zu erkennen ist, steht die Ritzelwelle 48 mit einer Antriebseinheit 74 in Antriebsverbindung. Enstprechend den Fign. 5 bis 8 weist die Antriebseinheit ein mehrteiliges Gehäuse 76 auf, zu dem ein Hauptgehäuseteil 78 gehört.

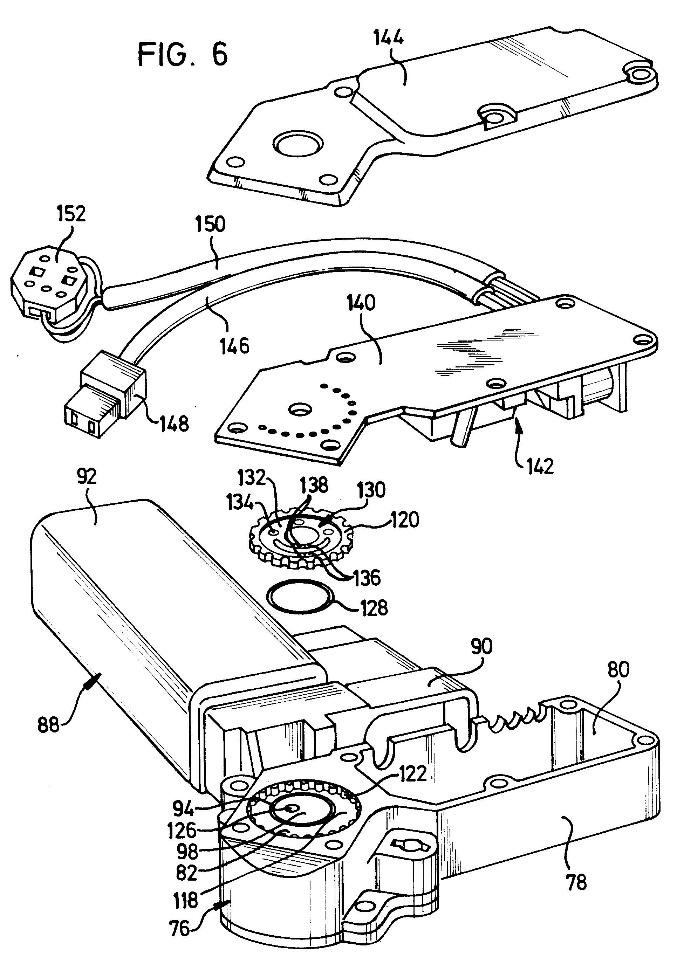

Die Ansicht von unten gemäß Fig.6 läßt erkennen, daß das Hauptgehäuseteil 78 eine sich nach unten öffnende Kammer 80 zur Aufnahme einer elektrischen Schaltungsanordnung sowie einen neben der Kammer 80 liegenden Getriebeaufnahmeraum 82 bildet, der sich in lotrechter Richtung durch das Hauptgehäuseteil hindurcherstreckt. Der Getriebeaufnahmeraum 82 weist eine in waagrechter Richtung verlaufende mittige Abzweigung auf, die eine Schnecke 84 aufnimmt. Die Schnecke 84 ist an der Abtriebswelle des Rotors 86 eines in seiner Drehrichtung umsteuerbaren Gleichstrommotors 88 befestigt. Der Gleichstrommotor 88 weist einen Dauermagneten sowie einen Kommutator mit Bürsten auf; sein Gehäuse bildet einen Teil des Gehäuses 76 der Antriebseinheit 74. Das Hauptgehäuseteil 78 ist mit einem Kommutatoraufnahmeteil 90 einstükkig verbunden, und ein Wicklungsgehäuseteil 92 steht seinerseits mit dem Kommutatoraufnahmeteil 90 in Verbindung. Zu dem Hauptgehäuseteil gehört ein damit einstückig verbundener rohrförmiger Abschnitt, der mit der Kammer 80 des Hauptgehäuseteils 78 in Verbindung steht, um eine elektrische Verbindung zu den Bürsten herstellen zu können und um eine Drehrichtungsumkehr des Motors 88 zu gestatten.

Die Verbindung des Wicklungsgehäuseteils 92 mit dem Kommutatoraufnahmeteil 90 des Hauptgehäuseteils 78 dient dem Positionieren der Rotorabtriebswelle 86 und der darauf sitzenden Schnecke 84 in waagrechter Lage innerhalb des Getriebeaufnahmeraums 82 des Hauptgehäuseteils 78. Innerhalb des eingezogenen mittleren Teils des Getriebeaufnahmeraums 82 ist ein Ringlager 94 befestigt. Oberhalb des Ringlagers 94 hat der Getriebeaufnahmeraum 82 eine im wesentlichen zylindrische Form und einen Durchmesser, der wesentlich größer als der Durchmesser des Ringlagers 94 ist. Der Durchmesser des oberen Teils des Getriebeaufnahmeraums 82 ist ausreichend groß bemessen, um ein Schneckenrad 96 aufzunehmen. Das Schneckenrad 96 weist eine zylindrische Nabe 98 auf, die von dem mittleren Teil des Schneckenrades aus nach unten steht und die zwecks Lagerung in das Ringlager 94 geschoben werden kann, wenn das Schneckenrad 96 bei der Montage in dem Getriebeaufnahmeraum 82 axial nach unten bewegt wird. Auf diese Weise dient das Ringlager 94 der drehbaren Abstützung des Schneckenrades 96 in dem Hauptgehäuseteil 78, wobei sich das Schneckenrad um eine lotrechte Achse drehen kann.

An der unteren Stirnseite des Schneckenrades 96 ist in ringförmiger Verteilung in Abstand von der Drehachse nahe dem Außenumfang des Schneckenrades 96 eine Folge von Zähnen 100 ausgebildet, die mit der Schnecke 84 in Kämmeingriff kommen. An der oberen Stirnseite des Schneckenrades 96 befindet sich ein ringförmig vertiefter Teil, der mit zwei Axiallagerteilen 102 in Eingriff steht. Die Axiallagerteile 102 stehen ihrerseits mit einem Haltering 104 in Eingriff, der im oberen Teil des Getriebeaufnahmeraums 82 benachbart dessen Innenumfangsfläche sitzt. Der Haltering 104 wird von einem Gehäusedeckel 106 gehalten, der an dem Hauptgehäuseteil 78 fest angebracht, z.B. mit diesem verschraubt, ist.

Wie am besten aus Fig.5 hervorgeht, weist der Gehäusedeckel 106 eine Mittelöffnung auf, welche den mittleren Teil der oberen Stirnfläche des Schneckenrades 96 freilegt. In der oberen Stirnfläche des Schneckenrades 96 ist eine keilverzahnte Ausnehmung 108 ausgebildet, die einen keilverzahnten Endabschnitt 110 am unteren Ende der Ritzelwelle 48 aufnehmen kann. Auf diese Weise ist die Ritzelwelle 48 mit dem Schneckenrad 96 konzentrisch verbunden, und die Ritzelwelle 48 wird in Abhängigkeit von Drehbewegungen des Schneckenrades 96 in der einen oder anderen Richtung angetrieben. Der Antrieb des Schneckenrades 96 in entgegengesetzten Richtungen erfolgt mittels des in seiner Drehrichtung umsteuerbaren Gleichstrommotors 88 unmittelbar durch Eingriff der mit dem Rotor 86 des Gleichstrommotors 88 fest verbundenen Schnecke 84 mit den Zähnen 100 an der Stirnfläche des Schneckenrades 96. Die Kraftübertragung erfolgt daher bei der erläuterten Antriebseinheit 74 zwischen dem Rotor 86 des Motors 88 und der Ritzelwelle 48 über die geringstmögliche Anzahl von Bauteilen, nämlich zwei (Schnecke 84 und Schneckenrad 96). Dadurch wird auch die Montage sehr vereinfacht. Eine Drehbewegung des Gleichstrommotors 88 in der einen Richtung führt zu einer Verstellbewegung des Deckels 88 in einer Richtung, während bei einem Drehen des Gleichstrommotors 88 in der entgegengesetzten Richtung der Deckel gleichfalls in entgegengesetzter Richtung verstellt wird.

Wenn der hintere Rand des Deckels 18 ausgestellt werden soll, um den Deckel in seine Lüftungsstellung zu bringen, erfolgt ein Verschieben der hinteren Gleitschuhe 36 und der mit diesen Gleitschuhen 36 verbundenen Ausstellhebel 56 mittels des Elektromotors 88 durch eine entsprechende Verstellbewegung der Antriebskabel 40 nach links in Fig.3, bis die Stifte 60 zur Anlage am Ende der Kulissenschlitze 62 kommen, das sich in Fig.3 auf der linken Seite befindet. Wenn der hintere Gleitschuh 36 weiter nach vorne bewegt wird (in Fig.3 nach links), richtet sich der Ausstellhebel 56 auf, wobei der Ausstellhebel das hintere Ende des Deckels 18 anhebt, während das vordere Ende des Deckels 18 von den vorderen Gleitschuhen 34 gehalten wird. Zum Schließen des Deckels, ausgehend von der ausgestellten Lage, werden die Gleitschuhe 36 mittels der Antriebskabel 40 in Fig.3 nach rechts geschoben. Dabei werden die Ausstellhebel 56 zunächst nach unten verschwenkt, bis eine an jedem der Ausstellhebel gelagerte Rolle 112 durch einen Ausschnitt 114 hindurch in die U-förmigen Führungen der Führungsbahnen 30 (Fig.3) eintritt. Wenn der Deckel 18 dann nach hinten unter den feststehenden Teil des Daches geschoben wird, verstellen die Antriebskabel 40 die Gleitschuhe 36 (Fig.3) weiter nach rechts, wobei der Stift 60 den Teil des Kulissenschlitzes 62 erreicht, der sich in Fig.3 auf der rechten Seite befindet. Weil die Rolle 122 nunmehr unter der oberen Begrenzung der Führungsbahn 30 liegt, kann der Ausstellhebel 56 nicht mehr hochschwenken. Vielmehr werden die Blende 54 und mit ihr der Deckel 18 nach unten gezogen, so daß eine auf der Blende 54 sitzende Rolle 116 durch den Ausschnitt 114 hindurchtritt und sich in die Führungsbahn 30 einlegt. Auf diese Weise wird der Deckel 18 soweit abgesenkt, daß er hinter den festen Teil der Dachfläche gezogen werden kann, wenn der Gleitschuh 36 weiter nach rechts bewegt wird.

Die Stromversorgung des Elektromotors 88 erfolgt mittels einer Steueranordnung, die ein Steuerorgan 120 in Form eines eine Hypozykloidalbewegung ausführenden Innenrades aufweist. Wie am besten aus Fig.5 hervorgeht, ist der Getriebeaufnahmeraum 82 in dem Hauptgehäuseteil 78 mit einer unteren zylindrischen Ausnehmung 118 ausgestattet, die unterhalb des Ringlagers 94 liegt und an deren Umfangswand eine Folge von Zähnen 122 ausgebildet ist. Das Steuerorgan 120 trägt eine regelmäßige Außenverzahnung, deren Zähnezahl um mindestens eins kleiner als die Zahl der Zähne 122 ist, und es hat einen Durchmesser, der kleiner als der Durchmesser der innenverzahnten Ausnehmung 118 ist. Das Steuerorgan 120 ist in der Ausnehmung 118 exzentrisch angeordnet, und es kann eine Hypozykloidalbewegung mit Bezug auf das Hauptgehäuseteil 78 ausführen. Für diesen Zweck ist das zweckmäßig aus Kunststoff gefertigte Steuerorgan 120 mit einem hochstehenden Zapfen 124 einstückig verbunden, der konzentrisch mit Bezug auf den Umfang des Steuerorgans 120 liegt und der in einer Bohrung 126 drehbar gelagert ist, die sich durch die Nabe 98 des Schneckenrades 96 exzentrisch mit Bezug auf die Drehachse des Schneckenrades 96 und die Achse des Ringlagers 94 hindurcherstreckt. Wenn sich das Schneckenrad 96 um seine Drehachse dreht, wird der Zapfen 124 des Steuerorgans 120 zu einer Bewegung der entlang einer kreisförmigen Bahn veranlaßt. Ein O-Ring 128 sitzt zwischen dem Ringlager 94 und der oberen Stirnfläche des Steuerorgans 120, um zwischen beiden einen zweckentsprechenden Abstand aufrechtzuerhalten. Die Beziehung zwischen der kreisförmigen Bahn und dem verzahnten Außenumfang des Steuerorgans 120 sowie dem verzahnten Innenumfang der Ausnehmung 118 ist so beschaffen, daß das Steuerorgan 120 gezwungen wird, eine Hypozylkloidal-Bewegungsbahn auszuführen. Bei dieser Bewegung steht der Außenumfang des Steuerorgans 120 mit dem Innenumfang der verzahnten Ausnehmung 118 im wesentlichen in Wälzkontakt, wobei der gegenseitige Eingriff zwischen den Zähnen 122 der Ausnehmung 118 und den Zähnen am Außenumfang des Steuerorgans 120 sicherstellt, daß es bei diesem Wälzkontakt zu keinem Schlupf kommt.

Die untere Stirnfläche des Steuerorgans 120, welche der Stirnfläche gegenüberliegt, von der aus sich der Zapfen 124 wegerstreckt, ist mit einer ringförmigen Ausnehmung versehen, in der ein ringförmiges elektrisches Kontaktelement 130 angeordnet ist. Das elektrische Kontaktelement 130 ist aus einem Blech aus elektrisch leitendem Metall, beispielsweise Kupfer, ausgestanzt und weist einen halbringförmigen Körper 132 auf, der mit einer Folge von Öffnungen versehen ist, durch die nach unten ragende Vorsprünge 134 hindurchgreifen, die mit dem Steuerorgan im Bereich der das Kontaktelement aufnehmenden Ausnehmung einstückig verbunden sind. Die Vorsprünge 134 sind unterhalb des Körpers 132 verstemmt oder verschmolzen, um das Kontaktelement 130 in der Ausnehmung des Steuerorgans 120 festzuhalten. Der restliche halbringförmige Teil des Bleches ist so gestanzt, daß zwei radial in Abstand voneinander liegende bogenförmige Arme 136 erhalten werden. In der Mitte jedes dieser Arme 136 ist eine U-förmig eingesenkte Warze ausgebildet, wobei die beiden Warzen ein erstes Paar von elektrischen Kontakten 138 darstellen. Die beiden Arme 136 sind so geformt, daß sie weg von dem Steuerorgan 120 vorgespannt sind. Die beiden radial in Abstand voneinander liegenden elektrischen Kontakte 138 sind untereinander elektrisch verbunden, da sie Teil desselben elektrisch leitenden Blechstückes sind. Die beiden elektrisch verbundenen Kontakte 138 sind weg von der zugehörigen Stirnfläche des Steuerorgans 120 federnd vorgespannt, bewegen sich jedoch zusammen mit dem Steuerorgan 120, weil der Körper 132 des Kontaktelements 130 in fester Verbindung mit dem Steuerorgan 120 steht.

An dem Hauptgehäuseteil 78 ist im Bereich von dessen Boden eine Leiterplatte 140 angebracht, von der ein Teil unterhalb des Steuerorgans 120 und ein anderer Teil unterhalb der Kammer 80 liegt. Schaltungskomponenten einer Steuerschaltung 142 sind an der Oberseite der elektrischen Leiterplatte 140 so montiert, daß sie in die Kammer 80 hineinreichen. Wie am besten aus Fig.6 hervorgeht, wird die Leiterplatte 140 in vorbestimmter Position unterhalb des Hauptgehäuseteils 78 mittels eines Gehäusebodens 144 gehalten, der mit dem Hauptgehäuseteil 78 verbunden, beispielsweise verschraubt wird. Entsprechend Fig.6 verläuft von der Steuerschaltung 142 ein Kabel 146 zu einem Stecker 148, über welchen die Steuerschaltung 142 mit einer Gleichstromquelle, beispielsweise der Batterie des Fahrzeuges (nicht dargestellt) verbunden wird. Ein zweites Kabel 150 geht von der Steuerschaltung 142 zu einem handbetätigten Schalter 152. Der Schalter 152 ist in Fig.4 an der Innenseite des Daches 14 unterhalb und unmittelbar vor der Dachöffnung 16 montiert. Es versteht sich jedoch, daß der Schalter 152 auch an jeder beliebigen anderen, vom Fahrer bequem erreichbaren Stelle sitzen kann, beispielsweise am Armaturenbrett oder dergleichen.

Fig.9 zeigt einen kreisförmigen Teil der elektrischen Leiterplatte 140, der nach oben weist und dessen Ausdehnung im wesentlichen der Fläche entspricht, die von der verzahnten Ausnehmung 118 begrenzt wird. Die obere Stirnfläche der Leiterplatte weist ein zweites Paar von in Abstand voneinander liegenden, untereinander elektrisch nicht verbundenen Kontakten 154 auf, die sich in einer solchen Lage befinden, daß sie mit dem ersten Kontaktpaar 138 auf dem Steuerorgan 120 in Eingriff kommen, wenn das Steuerorgan in einer Stellung steht, die der Offenstellung des Sonnendaches gemäß Fig.10 entspricht. In Fig.9 ist die Hypozylkloidal-Bewegung der beiden von dem Steuerorgan 120 getragenen elektrischen Kontakte 138 angedeutet, die von diesen Kontakten ausgeführt wird, wenn das Steuerorgan 120 seine Hypozylkloidal-Bewegung durchläuft, während der Deckel 18 von der Offenstellung gemäß Fig.10 in die in Fig.11 veranschaulichte Schließstellung gebracht wird. Ein drittes Paar von elektrisch untereinander nicht verbundenen elektrischen Kontakten 156 sitzt auf der Leiterplatte 140 in solcher Lage, daß die Kontakte 156 mit den beiden Kontakten 138 des Steuerorgans 120 in Eingriff kommen, wenn das Steuerorgan in einer Stellung steht, die der Schließstellung des Deckels 18 (Fig.11) entspricht. Fig.9 zeigt desweiteren schematisch die fortgesetzte Hypozylkloidal-Bewegung des ersten Kontaktpaares 138, wenn der Deckel 18 von der Schließstellung gemäß Fig.11 in die nach oben ausgestellte Lüftungsstellung (Fig.12) gebracht wird. Ein viertes Paar von elektrisch untereinander nicht verbundenen elektrischen Kontakten 158 ist an der Leiterplatte 140 in einer solchen Lage angeordnet, daß die Kontakte 158 mit dem ersten Kontaktpaar 138 des Steuerorgans 120 in Eingriff kommen, wenn das Steuerorgan in einer Stellung steht, welche der Lüfterstellung gemäß Fig.12 entspricht.

Aus den die Kontaktbewegungen andeutenden unterbrochenen Linien in Fig.9 ist zu erkennen, daß das Steuerorgan 120 keinen vollen Hypozylkloidal-Bewegungszyklus durchläuft, während sich der Dekel 18 zwischen seinen Grenzstellungen, nämlich der Offenstellung und der Lüfterstellung, bewegt. Die Form der in Fig.9 angedeuteten Kontaktbewegungsbahnen zeigt ferner, daß das zweite, dritte und vierte Kontaktpaar 154, 156 und 158 so angeordnet sind, daß sie mit dem ersten Kontaktpaar 138 während der raschesten Verstellbewegung der Kontakte 138 in Eingriff kommen. Dabei versteht es sich, daß die Hypozylkloidal-Bewegung des Steuerorgans 120 zur Folge hat, daß sich der Teil des Steuerorgans, an welchem die beiden Kontakte 138 sitzen, mit variierender Geschwindigkeit bewegt. Der Bereich geringster Geschwindigkeit liegt vor, wenn sich die Kontakte (138) nahe dem Umfang der verzahnten Ausnehmung 118 bewegen, während der Bereich höchster Geschwindigkeit erreicht wird, wenn die Kontakte von den Zähnen 122 am weitesten entfernt sind. Die Hypozylkloidal-Bewegung der beiden elektrischen Kontakte 138 erfolgt entlang von aufeinanderfolgenden Bögen, die mittels kleiner Schleifen untereinander verbunden sind. Jeder Bogen entspricht einem Umlauf des Außenumfangs des Steuerorgans 120 entlang dem Innenumfang der Verzahnung 122. In Fig.9 sind in unterbrochenen Linien fünf Paare von aufeinanderfolgenden elektrischen Kontakten dargestellt, die jeweils einen einem vollen Bogen entsprechenden Abstand voneinander und von dem zweiten Kontaktpaar 154 haben. Diese fünf Kontaktpaare sind in unterbrochenen Linien veranschaulicht, um dadurch anzudeuten, daß sie nicht funktionsfähig in dem Stromkreis liegen. Eines der fünf Kontaktpaare würde anstelle des zweiten Kontaktpaares 154 funktionsfähig gemacht, wenn die Größe des Deckels 18 und damit die Strecke der Verstellbewegung des Deckels kleiner als bei der veranschaulichten Ausführungsform sind.

Entsprechend Fig.9 weist die Leiterplatte 140 ein fünftes Paar von elektrisch untereinander nicht verbundenen elektrischen Kontakten 160 auf, die so angeordnet sind, daß sie mit dem ersten Kontaktpaar 138 in Eingriff kommen, wenn das Steuerorgan 120 in einer Stellung steht, die einer Stellung des Deckels 18 entspricht, in welcher der Deckel um etwa 150 mm geöffnet ist, d.h. eine entsprechende Zwischenstellung zwischen den Stellungen gemäß den Fign. 10 und 11 einnimmt. Die Strecke von 150 mm ist etwas größer als die Größe des Kopfes eines Erwachsenen, und das fünfte Kontaktpaar 160 ist wahlweise vorhanden, wie sich dies aus der nachfolgenden Beschreibung der Steuerschaltung selbst ergibt.

Die Leiterplatte 140 trägt ein sechstes Paar von elektrisch untereinander nicht verbundenen elektrischen Kontakten 162, die zwischen den Kontaktpaaren 156 und 158 in einer solchen Lage angeordnet sind, sie mit dem ersten Kontaktpaar 138 in Eingriff kommen, wenn das Steuerorgan 120 in einer Stellung steht, die einer Stellung des Deckels 18 etwa in der Mitte zwischen der Lüftungsstellung gemäß Fig. 12 und der Schließstellung gemäß Fig.11 entspricht. Diese beiden Kontakte 162 stellen gleichfalls ein Fakultativmerkmal dar.

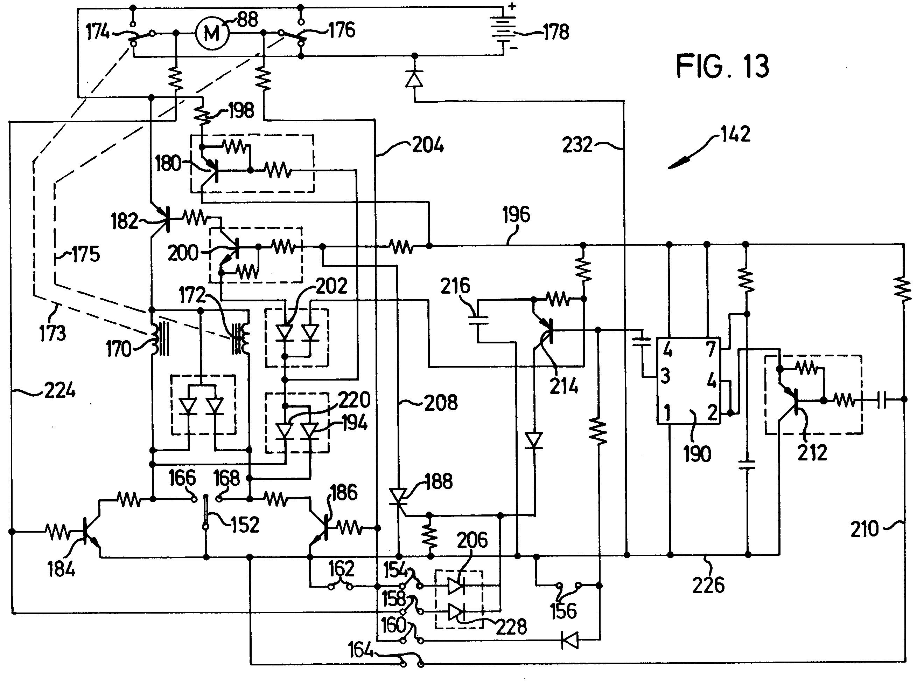

Schließlich weist die Leiterplatte 140 eine Folge von in gleichmäßigen Abständen angeordneten siebten Paaren von elektrisch untereinander nicht verbundenen elektrischen Kontakten 164 auf, die mit dem ersten Kontaktpaar 138 des Steuerorgans 120 der Reihe nach in Eingriff kommen, wenn die Kontakte 138 aufeinanderfolgende Schleifenteile ihrer Hypozylkloidal-Bewegung durchlaufen. Die äußeren Kontakte der Kontaktpaare 164 sind untereinander elektrisch verbunden, und die inneren Kontakte der Kontaktpaare 164 sind elektrisch untereinander verbunden. In dem Schaltbild gemäß Fig.13 ist nur ein einziges Kontaktpaar 164 veranschaulicht. Es versteht, daß diese Kontaktpaare nacheinander mittels der Kontakte 138 elektrisch verbunden werden, wenn die Kontakte 138 mit aufeinanderfolgenden Paaren von Kontakten 164 in Eingriff kommen. Die Aufgabe der Kontakte 164 ist unten in Verbindung mit der Beschreibung der Steuerschaltung 140 erläutert.

Fig.13 zeigt schematisch ein Schaltbild einer bevorzugten Ausführungsform der Steuerschaltung 142.

In Fig.13 ist der handbetätigte Schalter 152 mit drei Schaltstellungen dargestellt, nämlich einer Stellung für ein Schließen des Deckels, in welcher ein Kontakt 166 wirksam wird; einer Stellung für ein Öffnen des Deckels, in welcher ein Kontakt 168 wirksam wird; und einer Neutralstellung, die zwischen der Öffnungsstellung und der Schließstellung liegt und in der weder der Kontakt 166 noch der Kontakt 168 wirksam ist. Der Schalter 152 ist in Richtung auf die Neutralstellung vorgespannt.

Es sind zwei Relais 173 und 175 mit zugehörigen Relaisspulen 170 bzw. 172 und Relais-Schaltkontakten 174 bzw. 176 vorgesehen. Die Relaisspulen 170 und 172 sind an den Schließkontakt 166 bzw. den Öffnungskontakt 168 des Schalters 152 angeschlossen. Die Relaisspulen 170 und 172 steuern die Schaltkontakte 174 und 176, um den Gleichstrommotor 88 entsprechend der gewählten Schalterposition mit der schematisch bei 178 gezeigten Batterie zu verbinden. Vorliegend wird mit mechanischen Relais 173 und 175 gearbeitet, weil solche Relais mit großen Strömen, beispielsweise 60 Ampere, beaufschlagt werden können und im Vergleich zu anderen Relais, beispielsweise Festkörperrelais, relativ kostensparend sind. Es versteht sich jedoch, daß vorliegend auch Festkörperrelais ohne weiteres benutzt werden können.

Transistoren 180, 182 und 200 wirken zusammen, um Strom über die Relaisspulen 170 und 172 fließen zu lassen, wenn der Schalter 152 anfänglich in Verbindung mit dem Schließkontakt 166 oder dem Öffnungskontakt 168 gebracht wird.

Zwei Haltetransistoren 184 und 186 sind an den Schließkontakt 166 bzw. den Öffnungskontakt 168 des Schalters 152 angeschlossen. Die Haltetransistoren 184 und 186 sorgen für eine Haltefunktion, die es dem Gleichstrommotor 88 erlaubt weiterzulaufen, nachdem der Schalter 152 in die Neutralstellung zurückgekehrt ist.

Die Steuerschaltung 142 weist ferner einen Thyristor 188 auf, der benutzt wird, um den Gleichstrommotor 88 rasch zu stoppen. Die Bedingungen, unter denen der Thyristor 188 den Motor 88 anhält, sind weiter unter diskutiert.

Ein Zeitglied 190 der Steuerschaltung 142 hat die Aufgabe, die Verstellbewegung des Deckels 18 zu unterbrechen, wenn ein Hindernis ermittelt wird. Fig.13 zeigt zwei der elektrisch nicht untereinander verbundenen Kontakte 164. Die gegenseitige Verbindung dieser Kontakte 164 erfolgt jedesmal, wenn das Kontaktpaar 164 mit den beiden Kontakten 138 in Eingriff kommt, die sich zusammen mit dem Steuerorgan 120 bewegen. Das Zeitglied 190 vergleicht die Zeitspanne, welche die Kontakte 138 des Steuerorgans 120 brauchen, um von einem der Kontaktpaare 164 zu dem auf der Leiterplatte 140 nächsten Kontaktpaar 164 zu gelangen, mit einer vorbestimmten Zeit. Wenn die verstrichene Zeit größer als die vorbestimmte Zeit ist, wertet das Zeitglied 190 dies als Vorliegen eines Hindernisses, und das Zeitglied 190 gibt ein Signal ab, um den Motor 88 anzuhalten. Wenn beispielsweise eine Hand oder ein Arm eines Fahrzeuginsassen in der Dachöffnung 16 während des Schließens des Deckels 18 erfaßt wird, stellt das Zeitglied 190 fest, daß sich der Deckel 18 weniger rasch als normal schließt, und das Zeitglied 190 erzeugt ein Signal zum Anhalten des Gleichstrommotors 88.

In dem Schaltbild der Steuerschaltung 142 gemäß Fig. 13 sind ferner schematisch die fünf einzelnen Paare von elektrisch nicht untereinander verbundenen Kontakten gemäß Fig.9 dargestellt, mit denen die Kontakte 138 des Steuergliedes 120 zusammenwirken. Es handelt sich dabei um die Kontakte 154 für die Offenstellung des Deckels, die Kontakte 156 für die Schließstellung des Deckels, die Kontakte 158 für die Lüfterstellung des Deckels, die Kontakte 160 für ein Stoppen des Deckels bei einer Öffnung von 150 mm und die Kontakte 162 für halbausgestellten Deckel.

Die Wirkungsweise der in Fig. 13 veranschaulichten Steuerschaltung 142 ist nachstehend im einzelnen erläutert. Dabei ist die Beschreibung in vier Dachbetätigungsphasen gegliedert, und zwar: (1) eine Neutralphase, wenn der Deckel 18 stillsteht; (2) eine Öffnungsphase, wenn sich der Deckel öffnet oder von der Schließstellung gemäß Fig.11 in Richtung auf die Offenstellung gemäß Fig.10 bewegt; (3) eine Schließphase, wenn sich der Deckel 18 schließt oder weg von der Offenstellung der Fig.10 in Richtung auf die Schließstellung gemäß Fig.11 bewegt; und (4) eine Lüftungsphase, wenn der Deckel 18 für eine Lüftung sorgt oder sich zwischen der Schließstellung der Fig.11 und der Lüftungsstellung gemäß Fig. 12 entweder in Richtung auf die Lüftungsstellung oder von dieser wegbewegt.

1. Neutralphase

Während der Neutralphase wird die Steuerschaltung 142 nicht aktiviert. Der Schalter 152 steht in der in Fig.13 gezeigten Neutralstellung, und die Transistoren 180 und 182 sind gesperrt. Der Gleichstrommotor 88 ist nicht an die Batterie 178 angeschlossen, da beide Relais-Schaltkontakte 174 und 176 mit Masse in Verbindung stehen (d.h. der negativen Klemme der Batterie 178).

2. Öffnungsphase

Während der Öffnungsphase wird der Schalter 152 mit den Öffnungskontakten 168 in Eingriff gebracht. Ein nach Masse (d.h. der über eine Leitung 232 an die negative Seite der Batterie 178 angeschlossene Sammelleitung 226) führender Stromkreis wird von der Torelektrode des pnp-Transistors 180 über eine Diode 194 und den Schalter 152 geschlossen. Über diesen Stromkreis wird der Transistor 180 in Durchlaßrichtung vorgespannt, wodurch der Transistor 180 aufgesteuert wird. Infolgedessen wird eine Sammelleitung 196 auf ein hohes Potential gelegt (entsprechend der positiven Spannung der Batterie 178 abzüglich des Spannungsabfalls an einem Widerstand 198 und dem Transistor 180).

Aufgrund des an der Sammelleitung 196 anliegenden hohen Potentials wird der npn-Transistor 200 aufgesteuert, um einen über eine Diode 202, die Diode 194, den Kontakt 168 und den Schalter 152 führenden Stromkreis von der Torelektrode des pnp-Transistors 182 nach Masse zu schließen. Dadurch wird der pnp-Transistor 182 aufgesteuert. Strom fließt von der Batterie 178 über den Transistor 182. Dadurch kommt die Relaisspule 172 unter Strom. Der Relais-Schaltkontakt 176 schaltet auf die positive Seite der Batterie 178 um.

Wenn der Relais-Schaltkontakt 176 mit der positiven Seite der Batterie 178 verbunden ist, wird positives Potential an eine Leitung 204 angelegt, und der npn-Haltetransistor 186 wird aufgesteuert. Infolgedessen fließt Strom über die Relaisspule 172 und den Haltetransistor 186 nach Masse (Sammelleitung 226), wodurch der Schalter 152 überbrückt wird und die Steuerschaltung in der Deckelöffnungsphase verriegelt wird. Die Relaisspule 172 bleibt daher unter Strom, und der Gleichstrommotor 88 wird weiter mit Strom beaufschlagt, nachdem der Schalter 152 in die Neutralstellung zurückkehrt.

Nachdem der Gleichstrommotor 88 während der Öffnungsphase im stromführenden Zustand verriegelt ist, machen drei Bedingungen den Gleichstrommotor stromlos: (1) wenn der Deckel 18 seine Offenstellung erreicht; (2) wenn das Zeitglied 190 feststellt, daß ein Hindernis vorliegt; oder (3) wenn der Schalter 152 von Hand umgeschaltet wird. Die beiden ersten Bedingungen werden von der Steuerschaltung 142 selbsttätig ermittelt aufgrund des Zusammenwirkens zwischen den mit dem Steuerorgan 120 verbundenen elektrischen Kontakten 138 und den mit der Steuerschaltung 140 verbundenen elektrischen Kontakten 154 und 164. Die dritte Bedingung tritt nur ein, wenn der Fahrer oder Beifahrer den Schalter 152 von Hand betätigen.

Bei Erfüllung der ersten Bedingung wird der Gleichstrommotor 88 stillgesetzt, wenn der Deckel 18 seine in Fig.10 veranschaulichte Offenstellung erreicht. In dieser Stellung kommen die elektrischen Kontakte 138 des Steuerorgans 120 mit den Kontakten 154 der Leiterplatte in Eingriff, wodurch die Kontakte 154 geschlossen werden. Das an der Leitung 204 anliegende Potential wird über die geschlossenen Kontakte 154 und eine Diode 206 weitergeleitet, um den Thyristor 188 zu zünden. Nachdem der Thyristor 188 gezündet hat, wird ein Stromkreis geschlossen, der über eine Leitung 208 von der Torelektrode des Transistors 200 über den Thyristor 188 nach Masse führt. Dadurch werden die Transistoren 182 und 220 gesperrt. Infolgedessen wird der Strom zu der Relaisspule 172 unterbrochen. Der Relais-Schaltkontakt 176 schaltet zurück zu dem negativen Anschluß der Batterie 178. Der Gleichstrommotor 88 wird gestoppt.

Was die zweite Bedingung anbelangt, kann der Gleichstrommotor 88 stromlos gemacht werden, wenn das Zeitglied 190 feststellt, daß ein Hindernis vorliegt. Während das Steuerorgan 120 seine Hypozylkloidal-Bewegung durchläuft, kommen die Kontakte 138 nacheinander mit den Kontakten 164 der Leiterplatte in Eingriff, die Zwischenstellungen des Deckel entsprechen. Bei einem solchen Kontakteingriff werden die Kontakte 164 geschlossen, wodurch eine Leitung 210 mit Masse verbunden wird. Dadurch wird ein pnp-Rückstelltransistor 212 leitend gemacht.

Wenn der Rückstelltransistor auf diese Weise aufgesteuert ist, wird das Zeitglied 190 zurückgestellt. Das Zeitglied 190 vergleicht auf diese Weise die Zeit, welche das Steuerorgan 120 benötigt, um sich von einem zum nächsten Kontaktpaar 164 auf der Leiterplatte 140 zu bewegen, mit einer vorbestimmten Zeit. Wenn die verstrichene Zeit kleiner als die vorbestimmte Zeit ist, wird das Zeitglied 190 zurückgestellt. Wenn dagegen die verstrichene Zeit größer als die vorbestimmte Zeit ist, erfolgt keine Rückstellung des Zeitgliedes 190. Vielmehr steuert das Zeitglied 190 einen Transistor 214 auf, der seinerseits den Thyristor 188 zündet und dadurch den Gleichstrommotor 88 stoppt.

Die dritte Bedingung für ein Abschalten des Motors 88 wird erfüllt, wenn der Schalter 152 von Hand umgelegt wird. Anfänglich, wenn sich der Deckel 18 noch in der Schließstellung gemäß Fig.11 befindet, ist die Basis des Transistors 214 mit der auf Masse liegenden Sammelleitung 226 über die Kontakte 156 verbunden. Ein Kondensator 216 hat keine ausreichende Ladung, um den Transistor 214 in Durchlaßrichtung vorzuspannen, so daß der Thyristor 188 nicht gezündet wird. Kurz nachdem jedoch die Steuerschaltung 142 verriegelt wird, erfolgt die Aufladung des Kondensators 216. Wenn der Schalter 152 dann betätigt wird (beispielsweise der Schaltkontakt mit dem Öffnungskontakt 168 in Verbindung gebracht wird), spannt der Kondensator 216 den Transistor 214 in Durchlaßrichtung vor. Der Transistor 214 zündet seinerseits den Thyristor 188, wodurch der Gleichstrommotor 88 ausgeschaltet wird.

### 3. Schließphase

Während der Schließphase wird der Schalter 152 mit dem Schließkontakt 166 in Eingriff gebracht. Ein nach Masse (an der Sammelleitung 226) führender Stromkreis wird von der Torelektrode des pnp-Transistor 180 über eine Diode 220 und den Schalterkontakt 166 geschlossen. Über diesen Stromkreis wird der Transistor 180 in Durchlaßrichtung vorgespannt; der Transistor 180 wird aufgesteuert. Die Sammelleitung 196 wird auf das positive Potential der Batterie 178 abzüglich dem Spannungsabfall an dem Widerstand 198 und dem Transistor 180 gelegt.

Aufgrund des hohen Potentials an der Sammelleitung 196 wird der npn-Transistor 200 stromführend gemacht. Dadurch wird ein Stromkreis von der Torelektrode des pnp-Transistors 182 nach Masse geschlossen, der über die Diode 202, die Diode 220, den Schalterkontakt 166 und den Schalter 152 führt. Der pnp-Transistor 182 wird aufgesteuert. Strom fließt von der Batterie 178 über den Transistor 182 zur Relaisspule 170. Die Relaisspule 170 bewirkt, daß der Relais-Schaltkontakt 174 auf die positive Spannungsseite der Batterie 178 umschaltet.

Wenn der Relais-Schaltkontakt 174 an der positiven Seite der Batterie 178 anliegt, wird eine Leitung 224 auf positives Potential gelegt, und der npn-Haltetransistor 184 wird eingeschaltet. Infolgedessen fließt Strom über die Relaisspule 170 und den Haltetransistor 184 zu der auf Masse liegenden Sammelleitung 226; der Schalter 152 wird umgangen. Dementsprechend bleibt die Relaisspule 170 unter Strom, und der Gleichstrommotor 88 wird im eingeschalteten Zustand verriegelt, nachdem der Schalter 152 in die Neutralstellung 152 zurückkehrt.

Wenn der Gleichstrommotor 88 während der Schließphase in eingeschaltetem Zustand verriegelt ist, bewirkt die Erfüllung von vier Bedingungen ein Abschalten des Gleichstrommotors 88, nämlich: (1) wenn der Deckel 18 eine teilweise geschlossene Stellung erreicht (d.h. ein 150 mm breiter Spalt der Dachöffnung freigelegt ist); (2) wenn der Deckel 18 die Schließstellung gemäß Fig.11 erreicht; (3) wenn das Zeitgliesd 190 feststellt, daß ein Hindernis vorliegt; oder (4) wenn der Schalter 152 von Hand betätigt wird. Das Erfüllen der drei ersten Bedingungen wird von der Steuerschaltung 142 selbsttätig durch das Zusammenwirken der mit dem Steuerorgan 120 verbundenen elektrischen Kontakte 138 und den mit der Leiterplatte 140 verbundenen elektrischen Kontakten 156,160 und 164 ermittelt. Die vierte Bedingung wird nur erfüllt, wenn der Fahrer oder Beifahrer den Schalter 152 von Hand umlegt.

Was die erste Bedingung anbelangt, werden die gegeneinander isolierten Kontakte 160 elektrisch miteinander verbunden, wenn die Kontakte 138 des Steuerorgans 120 mit den die Teilschließstellung des Deckels (d.h. der Deckel 18 ist 150 mm weit geöffnet) repräsentierenden Kontakten 160 der Leiterplatte in Eingriff kommen. Weil die Leitung 204 während der Schließphase auf Masse gelegt ist (der Relais-Umschaltkontakt 176 steht mit der negativen Klemme der Batterie 178 in Verbindung), wird durch momentanes Schließen der Kontakte 160 der Transistor 214 in Durchlaßrichtung vorgespannt. Dadurch wird der Thyristor 188 gezündet, und der Gleichstrommotor 88 wird abgeschaltet.

Die Stoppbedingung für ein teilweises Schließen wird nur während der Schließphase erfüllt, weil die Kontakte 160 an die Leitung 204 angeschlossen sind, die während der Öffnungsphase auf hohem Potential liegt. Wenn daher in diesem Fall die Kontakte 160 geschlossen werden, wird der Transistor 214 nicht in Durchlaßrichtung vorgespannt, und der Thyristor 188 wird nicht gezündet. Der Gleichstrommotor 88 läuft in diesem Fall weiter, um den Deckel 18 zu öffnen.

Die Teilschließ-Stoppbedingung ist während der Schließphase vorgesehen um zu verhindern, daß ein Kopf, eine Hand oder ein Arm eines Fahrzeuginsassen eingeklemmt werden, während der Deckel 18 schließt. Ein Spalt von 150 mm Breite ist vorgesehen, weil ein solcher Spalt etwas größer als die breite des menschlichen Kopfes ist.

Im Falle der zweiten Bedingung wird der Gleichstrommotor 88 stromlos gemacht, wenn der Deckel 18 in die in Fig.11 veranschaulichte Schließstellung bewegt ist. In dieser Stellung kommen die elektrischen Kontakte 138 auf dem Steuerorgan 120 mit den elektrisch gegeneinander isolierten Kontakten 156 der Leiterplatte 140 in Eingriff, wodurch die Kontakte 156 miteinander verbunden werden. Weil die Kontakte 156 zwischen Masse (an der Sammelleitung 226) und der Torelektrode des Transistors 214 liegen, wird beim Schließen der Kontakte 156 der Transistor 214 aufgesteuert. Dies bewirkt ein Zünden des Thyristors 188, wodurch der Gleichstrommotor 88 stromlos gemacht wird.

Die dritte Bedingung bewirkt, daß der Gleichstrommotor 88 stromlos wird, wenn das Zeitglied 190 feststellt, daß ein Hindernis vorliegt. Die Wirkungsweise des Zeitgliedes 190 während der Schließphase ist identisch zu der Wirkungsweise des Zeitgliedes 190 während der oben erläuterten Öffnungsphase.

Die vierte Bedingung wird erfüllt, wenn der Schalter 152 von Hand betätigt wird. Wie oben in Verbindung mit der Öffnungsphase erläutert ist, wird der Kondensator 216 aufgeladen, kurz nachdem die Steuerschaltung 142 verriegelt wird. Wenn Schalter 152 betätigt wird (beispielsweise um den Schaltkontakt 152 mit dem Schließkontakt 166 in Eingriff zu bringen), spannt der Kondensator 216 den Transistor 214 in Durchlaßrichtung vor. Dadurch wird der Thyristor 188 gezündet, und der Gleichstrommotor 88 wird stromlos gemacht.

4. Lüftungsphase

Nachdem der Deckel 18 voll geschlossen ist, läßt sich der Deckel in die Lüftungsstellung bringen, indem der Schaltkontakt 152 von Hand mit dem Schließkontakt 166 in Eingriff gebracht wird. Wie oben in Verbindung mit der Schließphase erläutert ist, wird die Leitung 224 auf das positive Batteriepotential gezogen, und die Schaltungsanordnung wird über den Haltetransistor 184 verriegelt. Der Deckel 18 bewegt sich selbsttätig in die Lüftungsstellung. Wenn die Kontakte 138 des Steuerorgans 120 mit den der Lüftungsstellung zugeordneten Kontakten 158 der Leiterplatte in Eingriff kommen, werden die Lüftungskontakte 158 momentan geschlossen; das an der Leitung 224 anliegende positive Potential wird über eine Diode 228 übertragen, um den Thyristor 188 zu zünden und den Gleichstrommotor 88 auszuschalten.

Um den Deckel 18 ausgehend von der Lüftungsstellung zu schließen, wird der Schaltkontakt 152 von Hand mit dem Öffnungskontakt 168 in Eingriff gebracht. Der Haltetransistor 186 verriegelt die Schaltung, und die Leitung 204 wird auf das positive Potential der Batterie 178 gelegt. Wenn die Kontakte 138 des Steuerorgans 120 mit den Kontakten 162 der Leiterplatte 140 in Eingriff kommen, die der halbausgestellten Lage des Deckels zugeordnet sind, werden die Kontakte 162 geschlossen; dadurch wird die Leitung 204 auf Masse gezogen. Infolgedessen wird der Transistor 186 gesperrt, und der Motor wird angehalten, wenn der Deckel die teilausgestellte Lage erreicht. Die vorliegend erläuterte Steuerschaltung sorgt infolgedessen für zwei Lüftungsstellungen, nämlich die vollaugestellte Lege und die halbausgestellte Lage des Deckels.

Die Kontakte 162 bewirken ein Anhalten des Deckel 18 in der Teillüftungsstellung, so daß Finger von Fahrzeuginsassen nicht während des Schließens des Deckels 18 eingeklemmt werden. Die Bedingung für ein Stoppen in der Teillüftungsstellung spielt nur während des Schließens der Deckels 18, d.h. beim Übergang des Deckels von der vollausgestellten Lage in die Schließstellung, eine Rolle. Die Kontakte 162 sind mit der Leitung 204 verbunden, die an Masse gelegt wird, wenn sich der Deckel 18 in eine Lüftungsstellung bewegt.

Um den Schließvorgang des Deckels 18 zu beenden, wird der Schaltkontakt 152 von Hand mit dem Öffnungskontakt 168 in Eingriff gebracht. Der Gleichstrommotor 88 wird im stromführenden Zustand verriegelt, um den Deckel 18 zu schließen, bis die der Deckelschließstellung zugeordneten Kontakte 156 überbrückt werden. Dann wird der Thyristor 188 gezündet, und der Gleichstrommotor 88 wird ausgeschaltet.

Der Fahrer oder Beifahrer betätigt also einfach den Schalter 152, um den Kontakt 166 oder den Kontakt 168 zu öffnen oder zu schließen, worauf der Schalter 152 losgelassen wird. Die Steuerschaltung 142 geht dann in einen verriegelten Zustand über, um den Gleichstrommotor 88 im stromführenden Zustand zu halten. Nachdem die Verriegelung erfolgt ist, bewegt sich der Deckel 18 weiter in die Öffnungs-, Schließ- oder Lüftungsstellung, bis eine Stoppstellung (d.h. Offenstellung, Schließstellung, 150-mm-Stellung, Lüftungsstellung oder halbausgestellte Stellung) ermittelt wird, bis ein Hindernis festgestellt wird oder bis der Schalter 152 von Hand betätigt wird.

**Patentansprüche**

1. Motorantriebsanordnung zum Verstellen eines verstellbaren Fahrzeugteils (18) zwischen zwei Endstellungen, mit

   einem Gehäuse (76),

   einem von dem Gehäuse (76) getragenen, umsteuerbaren Antriebsmotor (88) mit einem um eine Rotorachse in entgegengesetzten Richtungen drehbaren Rotor (86),

   einer mit dem Rotor drehfest verbundenen und zusammen mit diesem in dem Gehäuse (76) um die Rotorachse drehbaren Schnecke (84), einem mit einer zentralen Nabe (98) versehenen Schneckenrad (96), dessen Achse senkrecht zu der Rotorachse steht und das an seiner einen Stirnfläche im Bereich eines zu der Schneckenradachse konzentrischen Kreisringes, eine in Richtung der Schneckenradachse weisende, mit der Schnecke (84) kämmende Verzahnung (100) trägt,

wobei das Gehäuse (76) so ausgebildet ist, daß das Schneckenrad (96) bei der Montage in Axialrichtung in die mit der Schnecke (84) kämmende Stellung geschoben werden kann,

einem mit dem Schneckenrad (96) drehfest verbundenen Antriebselement (50),

einer von dem Antriebselement (50) angetriebenen Anordnung (40) zum Verstellen des Fahrzeugteils (18) in entgegengesetzten Richtungen zwischen den beiden Endstellungen in Abhängigkeit von der Drehbewegung des Antriebselements in entgegengesetzten Richtungen, und

einer Steuereinrichtung (120, 138,142) zum
(1) wahlweisen Einschalten des Antriebsmotors (88) mit ausgewählter Rotordrehrichtung zwecks Verstellung des Fahrzeugteils (18) in entgegengesetzten Richtungen, und zum
(2) Ausschalten des Antriebsmotors (88) zwecks Anhalten des Fahrzeugteils (18) in der erreichten Stellung einschließlich der beiden Endstellungen.

2.  Motorantriebsanordnung zum Verstellen eines verstellbaren Fahrzeugteils (18) zwischen zwei Endstellungen, mit

einem Gehäuse (76),

einem von dem Gehäuse (76) getragenen, umsteuerbaren Antriebsmotor (88) mit einem um eine Rotorachse in entgegengesetzten Richtungen drehbaren Rotor (86), einer mit dem Rotor (86) in Antriebsverbindung stehenden Getriebeanordnung (84, 96),

einer die Getriebeanordnung (84, 96) mit dem verstellbaren Fahrzeugteil (18) verbindenden Übertragsanordnung (40,50) zum Verstellen des Fahrzeugteils (18) zwischen den beiden Endstellungen in entgegengesetzten Richtungen in Abhängigkeit von der Drehbewegung des Rotors (86), und

einer Steuereinrichtung (120, 138, 142) zum wahlweisen Einschalten des Antriebsmotors (88) in ausgewählter Rotordrehrichtung,

wobei die Steuereinrichtung (120,138,142) versehen ist

mit einem eine Drehachse aufweisenden Steuerorgan (120), das an dem Gehäuse (76) in Wirkungsverbindung mit der Getriebeanordnung (84,96) derart gelagert ist, daß
(1) bei einer Drehbewegung des Rotors (86) in der einen Richtung das Steuerorgan (120) eine Drehbewegung in einer Richtung um seine Drehachse ausführt, während seine Drehachse entlang einer kreisförmigen Bahn in einer Richtung verstellt wird, und
(2) bei einer Drehbewegung des Rotors (86) in der anderen Richtung das Steuerorgan (120) eine Drehbewegung in der anderen Richtung um seine Drehachse ausführt, während seine Drehachse entlang der kreisförmigen Bahn in der anderen Richtung verstellt wird, und

mit einer an dem Gehäuse (76) angebrachten Leiterplatte (140),

wobei die Bewegung des Steuerorgans (120) mit der Bewegung des verstellbaren Fahrzeugteils (18) derart koordiniert ist, daß das Steuerorgan bezüglich seiner Drehstellung um seine Drehachse und der Stellung seiner Drehachse entlang der kreisförmigen Bahn während der gesamten Bewegung des verstellbaren Fahrzeugteils (18) zwischen den beiden Endstellungen unterschiedliche Lagen einnimmt, und

mit miteinander zusammenwirkenden, von der Leiterplatte (140) und dem Steuerorgan (120) getragenen, stellungsabhängigen Steuermitteln (138, 154, 156, 158) zum Abschalten des Antriebsmotors (88) und zum Anhalten des verstellbaren Fahrzeugteils (18) bei Erreichen der einen oder der anderen Endstellung.

3.  Motorantriebsanordnung nach Anspruch 1 oder 2, wobei das verstellbare Fahrzeugteil der Deckel (18) einer Sonnendachanordnung (10) für ein mit einer Dachöffnung (16) versehenes Fahrzeugdach (14) ist und der Deckel (18) mittels einer Deckelmechanik (20) zwischen einer die eine Endstellung bildenden Offenstellung über eine Schließstellung in eine die andere Endstellung bildende Lüftungsstellung verstellbar ist, wobei das Gehäuse (76) benachbart der Dachöffnung (16) dachfest angebracht ist, und wobei die stellungsabhängigen Steuermittel (138, 154, 156, 158) zusätzlich zum Anhalten des Deckels (18) in der Schließstellung ausgelegt sind.

4.    Motorantriebsanordnung nach Ansprüchen 1 und 3, wobei das Schneckenrad (96) mit einer radial einwärts von der Verzahnung (100) liegenden Innenkeilverzahnung (108) versehen ist, die mit einer Außenkeilverzahnung (110) einer Ritzelwelle (48) in Eingriff steht, die ein Ritzel (50) trägt, das mit dem Deckel (18) über langgestreckte Antriebselemente (40) in Antriebsverbindung steht.

5.    Motorantriebsanordnung nach einem der Ansprüche 1,3 und 4, wobei die Steuereinrichtung (120, 138, 142) ein eine Hypozykloidalbewegung ausführendes Steuerorgan (120) aufweist, das an dem Gehäuse (76) mit Bezug auf das Schneckenrad (96) um eine Drehachse derart drehbar gelagert ist, daß

     (1) bei einer Drehbewegung des Schnekkenrades (96) in der einen Richtung das Steuerorgan (120) eine Drehbewegung in einer Richtung um seine Drehachse ausführt, während seine Drehachse entlang einer kreisförmigen Bahn in einer Richtung verstellt wird, und

     (2) bei einer Drehbewegung des Schnekkenrades (96) in der anderen Richtung das Steuerorgan (120) eine Drehbewegung in der anderen Richtung um seine Drehachse ausführt, während seine Drehachse entlang der kreisförmigen Bahn in der anderen Richtung verstellt wird,

wobei die Steuerorganbewegung mit der Bewegung des verstellbaren Fahrzeugteils (18) derart koordiniert ist, daß das Steuerorgan (120) bezüglich seiner Drehstellung um seine Drehachse und bezüglich der Stellung seiner Drehachse entlang der kreisförmigen Bahn während der gesamten Verstellung des verstellbaren Fahrzeugteils (18) zwischen den beiden Endstellungen unterschiedliche Lagen einnimmt, und

wobei die Steuereinrichtung ferner mit stellungsabhängigen Steuermitteln (138, 154, 156, 158) versehen ist, die in Abhängigkeit von der Lage des Steuerorgans (120) den Antriebsmotor (88) abschalten und den Rotor (86) sowie das verstellbare Fahrzeugteil (18) anhalten, wenn das Fahrzeugteil (18) eine der beiden Endstellungen und gegebenenfalls eine Zwischenstellung erreicht.

6.    Motorantriebsanordnung nach Anspruch 5, wobei zur Lagerung des Steuerorgans (120) eine mit dem Steuerorgan oder dem Schneckenrad (96) fest verbundene Welle (124) und eine in dem Schneckenrad bzw. dem Steuerorgan ausgebildete, die Welle aufnehmende Bohrung (126) vorgesehen sind, und wobei die Welle (124) und die Bohrung (126) miteinander ausgerichtete, mit der Drehachse des Steuerorgans zusammenfallende Achsen aufweisen, die mit Bezug auf die Achse des Schneckenrades radial versetzt sind.

7.    Motorantriebsanordnung nach Anspruch 6, wobei das Steuerorgan (120) aus Kunststoff gefertigt und mit der Welle (124) derart einstückig verbunden ist, daß die Welle von der einen Stirnseite des Steuerorgans absteht, und wobei die Bohrung (126) sich durch die Nabe (98) des Schneckenrades (96) hindurcherstreckt.

8.    Motorantriebsanordnung nach einem der Ansprüche 5 bis 7, wobei das Steuerorgan (120) eine Außenverzahnung trägt, die mit einer mindestens einen Zahn mehr aufweisenden Innenverzahnung (122) des Gehäuses (76) kämmt.

9.    Motorantriebsanordnung nach einem der Ansprüche 5 bis 8, wobei die stellungsabhängigen Steuermittel (138, 154, 156, 158) ein erstes Paar von in Abstand voneinander liegenden elektrischen Kontakten (138), die an einer Stirnfläche des Steuerorgans (120) sitzen und mit dem Steuerorgan drehfest verbunden sind, sowie eine mit dem Gehäuse (76) fest verbundene elektrische Leiterplatte (140) aufweisen, die mit einem zweiten Paar von elektrischen Kontakten (154), das mit dem ersten Kontaktpaar (138) in Eingriff kommt, wenn das Steuerorgan (120) in eine der einen Endstellung des verstellbaren Fahrzeugteils (18) entsprechende erste Stellung gebracht ist, und mit einem dritten Paar von elektrischen Kontakten (158) versehen ist, das mit dem ersten Kontaktpaar (138) in Eingriff kommt, wenn das Steuerorgan (120) in eine der anderen Endstellung des verstellbaren Fahrzeugteils (18) entsprechende zweite Stellung gebracht ist.

10.   Motorantriebsanordnung nach Ansprüchen 3 und 9, wobei die Leiterplatte (140) mit einem vierten Paar von elektrischen Kontakten (156) versehen ist, das mit dem ersten Kontaktpaar (138) in Eingriff kommt, wenn das Steuerorgan (120) in eine der Schließstellung des Deckels (18) entsprechende dritte Stellung gebracht ist.

11. Motorantriebsanordnung nach Anspruch 2, wobei die stellungsabhängigen Steuermittel (138, 154, 156, 158) eine mit dem Steuerorgan (120) mitbewegbare erste elektrische Kontaktanordnung (138) und eine auf der Leiterplatte (140) sitzende zweite elektrische Kontaktanordnung (154, 156, 158), aufweisen, die bei der Bewegung des Steuerorgans (120) mit der ersten Kontaktanordnung (138) zusammenwirkt.

12. Motorantriebsanordnung nach Anspruch 11, wobei die erste Kontaktanordnung ein an einer Stirnfläche des Steuerorgans (120) sitzendes erstes Paar von untereinander elektrisch verbundenen elektrischen Kontakten (138) aufweist, und wobei die zweite Kontaktanordnung mit einem zweiten Paar von elektrisch nicht miteinander verbundenen elektrischen Kontakten (154), die mit dem ersten Kontaktpaar in Eingriff kommen, wenn das Steuerorgan (120) in einer der einen Endstellung des verstellbaren Fahrzeugteils (18) entsprechenden ersten Stellung steht, und mit einem dritten Paar von elektrisch nicht miteinander verbundenen elektrischen Kontakten (158) versehen ist, die mit dem ersten Kontaktpaar (138) in Eingriff kommen, wenn das Steuerorgan (120) in einer der anderen Endstellung des verstellbaren Fahrzeugteils (118) entsprechenden zweiten Stellung steht.

13. Motorantriebsanordnung nach Ansprüchen 3 und 12, wobei die erste und die zweite Stellung des Steuerorgans (120) der Offenstellung bzw. der Lüftungsstellung des Deckels (18) entsprechen, und wobei die zweite Kontaktanordnung (154, 156, 158) mit einem vierten Paar von elektrisch nicht miteinander verbundenen elektrischen Kontakten (156) versehen ist, die mit dem ersten Kontaktpaar (138) in Eingriff kommen, wenn das Steuerorgan (120) in einer der Schließstellung des Deckels (18) entsprechenden dritten Stellung steht.

14. Motorantriebsanordnung nach einem der Ansprüche 9 bis 13, wobei die erste und die zweite sowie gegebenenfalls die dritte Stellung des Steuerorgans (120) Stellungen entsprechen, während deren die Verstellgeschwindigkeit des ersten Kontaktpaares (138) ein Maximum erreicht.

15. Motorantriebsanordnung nach einem der Ansprüche 9 bis 14, wobei das erste Kontaktpaar (138) an einem Metallblechteil (130) ausgebildet ist, das an der einen Stirnfläche des Steuerorgans (120) sitzt und einen an dem Steuerorgan befestigten Körper (132) sowie zwei radial in Abstand voneinander liegende bogenförmige Arme (136) aufweist, die mit die Kontakte des ersten Kontaktpaars (138) bildenden, vorzugsweise mittigen, Vorsprüngen versehen sind und die in einer von der Stirnfläche des Steuerorgans wegweisenden Richtung federnd vorgespannt sind.

16. Motorantriebsanordnung nach Anspruch 15, wobei das Steuerorgan (120) an der dem Metallblechteil (130) zugewendeten Stirnfläche Vorsprünge (134) trägt, die in Öffnungen des Körpers (132) des Metallblechteils (130) eingreifen und zwecks Festlegung des Metallblechteils verformt sind.

17. Motorantriebsanordnung nach einem der Ansprüche 9 bis 16, wobei die Steuereinrichtung (120, 138, 142) eine handbetätigte Schalteranordnung (152) und eine, vorzugsweise auf der Leiterplatte (140) sitzende, Relaisanordnung (170, 172, 174, 176) zum Einleiten des Einschaltens des Antriebsmotors (88) bei Handbetätigung der Schalteranordnung (152) sowie eine Halteanordnung (184, 186) aufweist, welche nach Betätigen der Schalteranordnung den Antriebsmotor in eingeschaltetem Zustand verriegelt, um eine Verstellbewegung des verstellbaren Fahrzeugteils (18) bis zum Stoppen mittels der stellungsabhängigen Steuermittel (138, 154, 156, 158) zu bewirken.

18. Motorantriebsanordnung nach einem der Ansprüche 9 bis 17, wobei die stellungsabhängigen Steuermittel (138, 154, 156, 158) zusätzlich mehrere von der Leiterplatte (140) getragene, in Abstand voneinander liegende fünfte Paare von elektrischen Kontakten (160), die mit dem ersten Kontaktpaar (138) in Eingriff kommen, wenn das Steuerorgan (120) in mehrere Zwischenstellungen entsprechend Zwischenstellungen des verstellbaren Fahrzeugteils (18) zwischen den beiden Endstellungen bewegt wird, ein Zeitglied (190), das die Zeitspanne zwischen dem Eingriff des ersten Kontaktpaars (138) mit benachbarten fünften Kontaktpaaren (160) mit einem vorbestimmten Zeitintervall vergleicht, sowie Abschaltmittel (188, 214) zum Abschalten des Antriebsmotors (88) während der Verstellung des verstellbaren Fahrzeugteils (18) aufweist, wenn die Zeitspanne zwischen dem Eingriff des ersten Kontaktpaars (138) mit benachbarten fünften Kontaktpaaren (160) größer als das vorbestimmte Zeitintervall ist.

19. Motorantriebsanordnung nach Anspruch 3 und einem der Ansprüche 9 bis 18, wobei die stellungsabhängigen Steuermittel (138, 154, 156, 158) zusätzlich ein sechstes Paar von elektrischen Kontakten (162) aufweisen, das mit dem ersten Kontaktpaar (138) in Eingriff kommt, wenn sich das Steuerorgan (120) in eine vierte Stellung bewegt, die einer den Durchtritt des menschlichen Kopfes erlaubenden Teilöffnungsstellung des Deckels (18) entspricht, und wobei mittels der stellungsabhängigen Steuermittel der Antriebsmotor (88) abschaltbar ist, wenn der Deckel (18) während einer Schließbewegung die Teilöffnungsstellung erreicht.

20. Motorantriebsanordnung nach Anspruch 3 und einem der Ansprüche 9 bis 19, wobei die stellungsabhängigen Steuermittel (138, 154, 156, 158) zusätzlich ein siebtes Paar von elektrischen Kontakten (164) aufweisen, das mit dem ersten Kontaktpaar (138) in Eingriff kommt, wenn sich das Steuerorgan (120) in eine fünfte Stellung bewegt, die einer Teillüftungsstellung des Deckels (18) entspricht, und wobei mittels der stellungsabhängigen Steuermittel der Antriebsmotor (88) abschaltbar ist, wenn der Deckel (18) die Teillüftungsstellung erreicht.

FIG. 1

FIG. 2

# FIG. 3

EP 0 477 933 A1

# FIG. 4

# FIG. 5

FIG. 6

FIG. 7

FIG. 8

FIG. 9

FIG. 10

FIG. 11

FIG. 12

FIG. 13

EP 0 477 933 A1

Europäisches
Patentamt

**EUROPÄISCHER RECHERCHENBERICHT**

| | **EINSCHLÄGIGE DOKUMENTE** | | EP 91116431.7 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
| A | DE - A - 3 230 065 (AISIN SEIKI K.K.) * Gesamt * -- | 1,2 | B 60 J 7/057 E 05 F 15/10 |
| A | DE - A - 3 728 008 (ROCKWELL GOLDE GMBH) * Fig. * -- | 1,2 | |
| A | DE - A - 3 030 642 (WEBASTO WERK) * Fig. * -- | 1,2 | |
| A | GB - A - 2 196 054 (OHI SEISAKUSHO COMP.) * Zusammenfassung * -- | 2 | |
| A | DE - A - 3 840 724 (GAUS MIKROTECHNIK) * Fig. 9 * ---- | 2 | |

| RECHERCHIERTE SACHGEBIETE (Int Cl⁵) |
|---|
| B 60 J E 05 F |

Der vorliegende Recherchenbericht wurde für alle Patentansprüche erstellt.

| Recherchenort | Abschlußdatum der Recherche | Prüfer |
|---|---|---|
| VIENNA | 02-12-1991 | HENGL |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82